# EUROPEAN PATENT SPECIFICATION

(11) **EP 2 429 309 B1**
(45) Date of publication and mention of the grant of the patent: **11.12.2013**
(21) Application number: 10740274.5
(22) Date of filing: 07.05.2010
(51) Int. Cl.: A23G 9/04, A47J 43/27, B65D 85/78

(54) **PRODUCT AND METHOD FOR THE PREPARATION OF A MILKSHAKE**
PRODUKT UND VERFAHREN ZUR HERSTELLUNG EINES MILCHSHAKES
PRODUIT ET METHODE POUR LA PRÉPARATION D'UN LAIT FRAPPÉ

(30) Priority: 08.05.2009 NL 2002858
(43) Date of publication of application: 21.03.2012
(73) Proprietor: Dairy Innovation B.V., 6835 AE Arnhem (NL)
(72) Inventor: WESTDIJK, Michael Jurjen, 7511 PR Enschede (NL); LAND, Jan Gerhard, 7542 AC Enschede (NL)
(74) Representative: Jansen, Cornelis Marinus
(86) International application number: PCT/IB2010/052033
(87) International publication number: WO 2010/128490

(56) References cited:
- EP-A1- 0 685 196
- WO-A1-2005/087015
- GB-A- 2 450 909
- US-A- 3 920 226
- US-A- 5 544 960
- US-A1- 2006 250 887
- US-B1- 6 338 569

## Description

The invention relates to a packed half product for the preparation of a milkshake.

The term milkshake has to be explained as a cold, airy, thick-liquid drink, acquired by the mixing of ice and milk, fruit, fruit pulp, fruit drinks, jams, fruit syrup, chocolate milk and the like. Of importance in this case is that the ingredients are being mixed well, that the mixture has a temperature which is preferably lower than 0 °C, more specific between -2 °C and -1.5 °C, and that the viscosity is preferably that kind of that it can be drunk/eaten through a straw. The last can among other things be achieved by the enclosing of a gas, like air, in the mixture.

The whipping and enclosing of a gas in the mixture can be achieved in different ways, like the use of mechanical or hand operated mixers or rods. It is also possible that a gas or gas holding element can be added to the mixture.

WO2005/087015A1 discloses a beverage system, in which beverage is introduced into a container, partly filling the container and thus leaving a significant head space. The container is then cooled, in order to at least partly freeze the beverage. A relatively heavy ball is included in the container, separated from the frozen beverage. When the beverage is frozen the container can be shaken such that the ball will break up the frozen beverage and thus form a slush. A slush is therefore formed by fractioned ice particles floating in a liquid fraction made of the same beverage as the ice.

US2006/250887 discloses a shaker comprising a glass container with a rod extending longitudinally through said container and having a spiralling wire element movable along the rod. This shaker is disclosed for mixing two beverages or a beverage with a powder. There is no disclosure of freezing or use of ice, nor of fractioning means for dividing ice units.

US3920226 discloses a jug for making orange drink from a frozen concentrate of orange juice. To this end the container comprises a twisted blade protruding from the bottom of the container, onto which a container comprising a frozen cylinder of orange concentrate is pushed. The container is rotated within the jug, around the knife for scraping the concentrate from the container, after which the container is removed and water is added. By then shaking the jug the concentrate will melt and be dispersed through the water, forming the orange drink.

EP0685196 a shaker/egg-beater is described having a container comprising an upper part, a lower part and a ring element enclosed between them, comprising radial spokes connected by a center ring. There is no disclosure of introducing a multiplicity of units of ice into the container, or of fractioning means in said container for partitioning said multiplicity of units into small parts, nor of adding a liquid by the consumer to such multiplicity of units of ice.

US5544960 again discloses a device for mixing powder and a liquid, by using "non-round" mixing elements that can agitate when shaking the container comprising the liquid and powder. The mixing elements are referred to as "stirring objects" or "stirrers". These elements are not fractioning means.

An objection of existing ways of operating is that for preparation of a good milkshake special equipment is needed and/or ingredients have to be measured well. The invention as defined in the claims aims to overcome these objections in an efficient, effective and/or simple way.
Therefore, according to the invention, the half product contains a multiplicity of units of ice, and tools to divide the units of ice in small parts of ice, whereby the fractionating means and the number of units of ice are packed together in a consumer packaging, and whereby the fractionating means are arranged in such a way that the units of ice can be divided in small parts by taken the fractionating mean with the enclosed units of ice out of the packaging and putting them in a, in particular fluid tight, container and shaking this container together with a liquid which has been added by the user.

In this context the word ice among others refers to: ice cream, water ice, frozen curd, yoghurt, and etcetera.

The fractionating means and the units of ice are preferably designed in such a way that a good heat transfer between liquid and ice can occur, which makes it possible that the milkshake preferably can be produced within 30 seconds.

The units of ice are preferably spherical shaped, whereby the liquid can spread between the units of ice easily, when these are situated against each other.

The fractionating means cover preferably a perimeter wall in or on which the units of ice are placed, whereby these simultaneously function as container for the ice. The fractionating means are preferably produced of a plastic or plasticized carton board.

The perimeter wall can be rolled, bended or folded in a preferred version. This for example makes it easier for the consumer to put the half product after purchase in a design that is fitting with the container. The perimeter wall in another preferred version is substantially reel shaped, more over preferably substantially cylindrical shaped, for example if the half product already has been place in a container for sale to a consumer.

The fractionating means are preferably accommodated with a multiplicity of knives for the cutting of the units of ice, in such a way that the units of ice are being moved against the edges of the knives by shaking. From this viewpoint the knives preferably point in the axial direction, and the knives have preferably edges that point in both axial directions. The perimeter wall is preferably provided with holes; wherefore during shaking air is brought into the mixture. The knives and the holes are being shaped preferably by inward bended parts of the perimeter wall, and the knives are preferably triangular shaped. Further, the knives are preferably regular spread among the surface of the perimeter wall. During shaking the knives that stick out occur turbulence in the already cut mixture, whereby the air injection is advanced.

As well the invention covers a product for the preparation of a milkshake, containing an in particular liquid tight container for containing the milkshake to be prepared, a multiplicity of units of ice that are being placed in the container and fractionating means that are being placed in the container for the partitioning of the units of ice into small parts, whereby the fractionating means are placed in the container in such a way that the units of ice can be divided into small parts by shaking the container with inside the container the present units of ice and a liquid that has been added by the user.

As well the invention covers a method for the preparation of a milkshake, wherein a consumer fills a container with fractioning means filled with units of ice, with a liquid, closes the container with a lid and shakes the container forming a milkshake.

The invention will be explained on the basis of example presentations shown in figures, in which:
Figures 1, 2 and 3 show a product in perspective according to the invention in several stages of the preparation of a milkshake;
Figure 4 in perspective shows the partitioning element from figures 1, 2 and 3;
Figures 5, 6, 7, 10 and 11 show in perspective several alternative embodiments of the partitioning element, and
Figures 8 and 9 in perspective show an embodiment from a rolled partitioning element, whereby in figure 9 the partitioning element has been rolled filled with balls of ice.

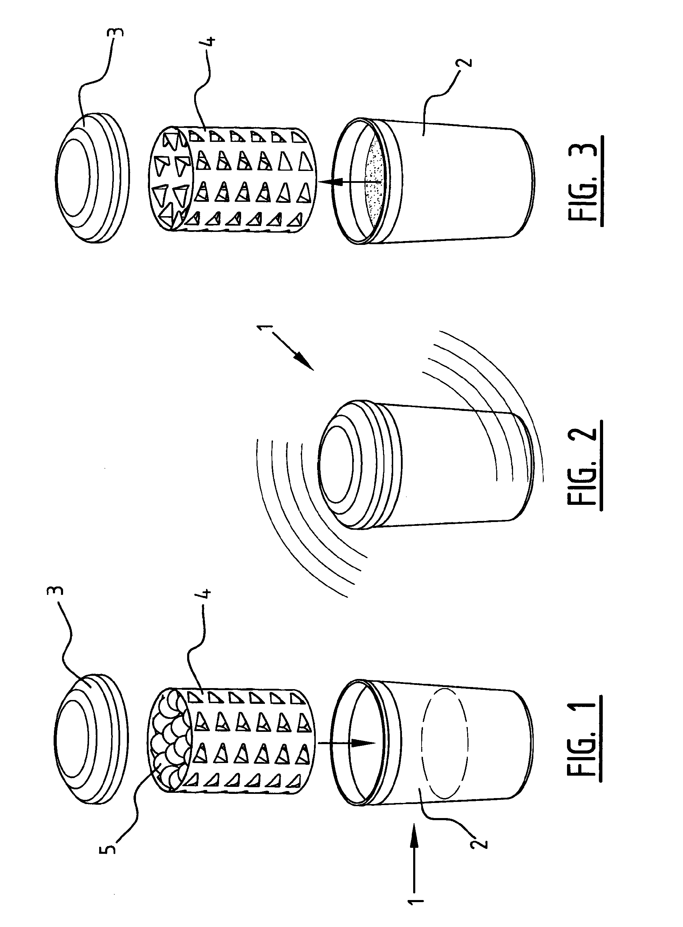

According figures 1, 2 and 3 a product for the preparation of a milkshake contains a container 1, containing a substantially cylindrical cup 2 of circa 600 ml with a connectable lid 3, and a substantially cylindrical partitioning element 4, in which bolls of ice cream 5 are put. The through cut of partitioning element 4 is circa 10-20% smaller than the through cut of container 1, and the length of the partitioning element is circa 30% to 70% smaller than the height of the container 1.
The enclosed container 1, and the partitioning element 4 filled with the bolls of ice cream can be sold as product to the consumer. As alternative it is possible to sell partitioning element 4 filled with bolls of ice 5 in a disposable packaging to the consumer, whereby the consumer is given the opportunity to buy container 1 separately, whether filled with liquid or not. Depending on the kind of ice the product can be sold in melted condition and can be frozen by the consumer self at home in a freezer.

In both cases the consumer fills container 1, with the partitioning element 4 with the frozen ice bolls 5, for example with cooled milk (figure 1). Following the consumer closes the container 2 with lid 3 and shakes it during circa 30 seconds up and down (figure 2). Following the container 1 can be opened and the partitioning element 4 can eventually be removed (it is possible to leave the partitioning element 4 in the container, and drink the milkshake with a straw).

In an alternative embodiment partitioning element 4 filled with the frozen ice bolls is packed in a first share part, and for example the cooled milk is packed in a second share part. After the lids of both share parts are being taken off, the two share parts can be connected to each other with the open sides, for example by screwing, to form one container 4 and the combination can be shaken. One of the bottoms of the share parts is in this case supplied with a sealed opening to put in a straw.

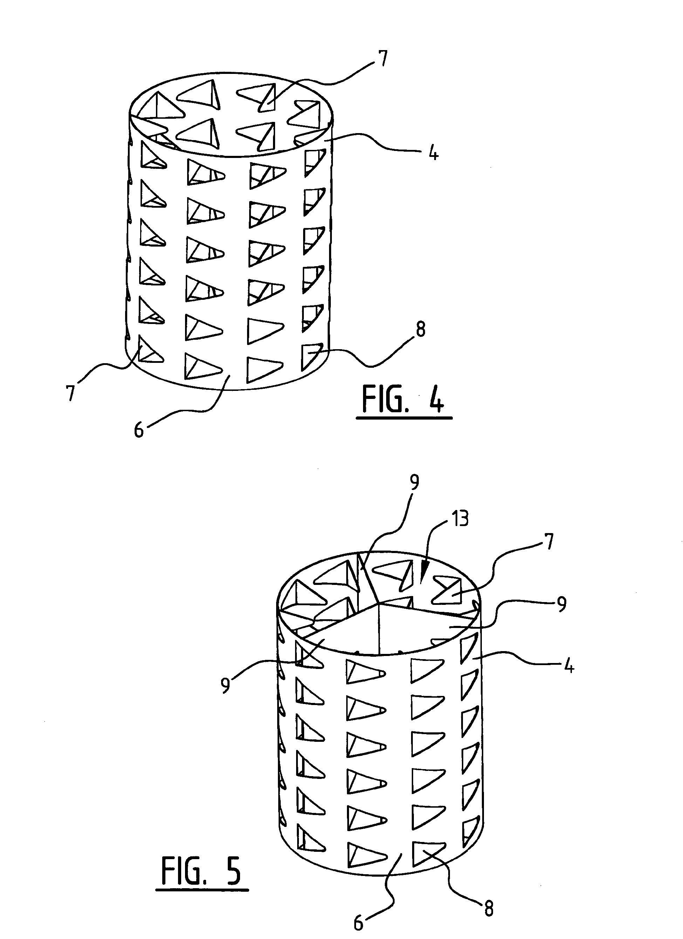

The partitioning element 4 according figure 4 contains a cylindrical wall of thin plate material, in which V-shaped cutters shaped triangular knives 7 that are bended inwards because of which holes 8 are being shaped. The knives 7 thereby point in axial direction. The partitioning element according figure 5 contains furthermore three walls 9 that stretch radial outwards from the axes of the wall to wall 6, by which three compartments 13 in the partitioning element 4 are being shaped. These walls 9 also serve as knives to divide the ice. In a version of the embodiment of figure 4 walls 9 point about the direction of the central axes from the cylindrical perimeter wall, but are over there not connected to each other, and reach furthermore just a part of the length of the cylindrical perimeter wall 6, for example in the middle of it.

In this way the wall parts form flexible knives that create turbulence and prevent the forming of a big lump of ice.

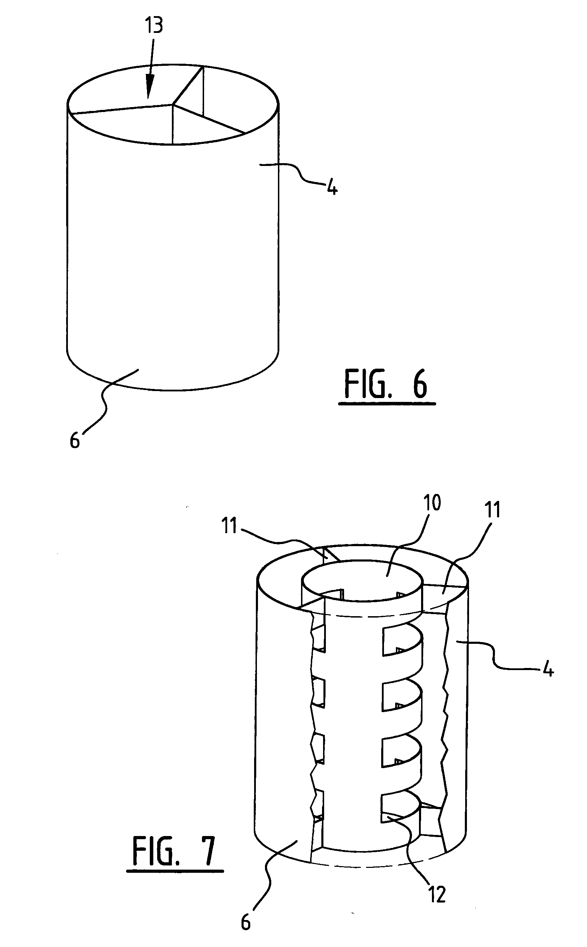

Figure 6 shows an embodiment of a partitioning element 4 in which the knives 7 and the holes 8 in the perimeter wall 6 of figure 5 are taken out.

Figure 6 shows an embodiment whereby within the perimeter wall 6 a cylindrical inner wall 10 has been applied, between which radial connecting elements 11 expend. In the inner wall 9 holes 12 are applied. The rims of the holes 12, the connecting elements 11 and the walls 6, function all as knives during the shaking.

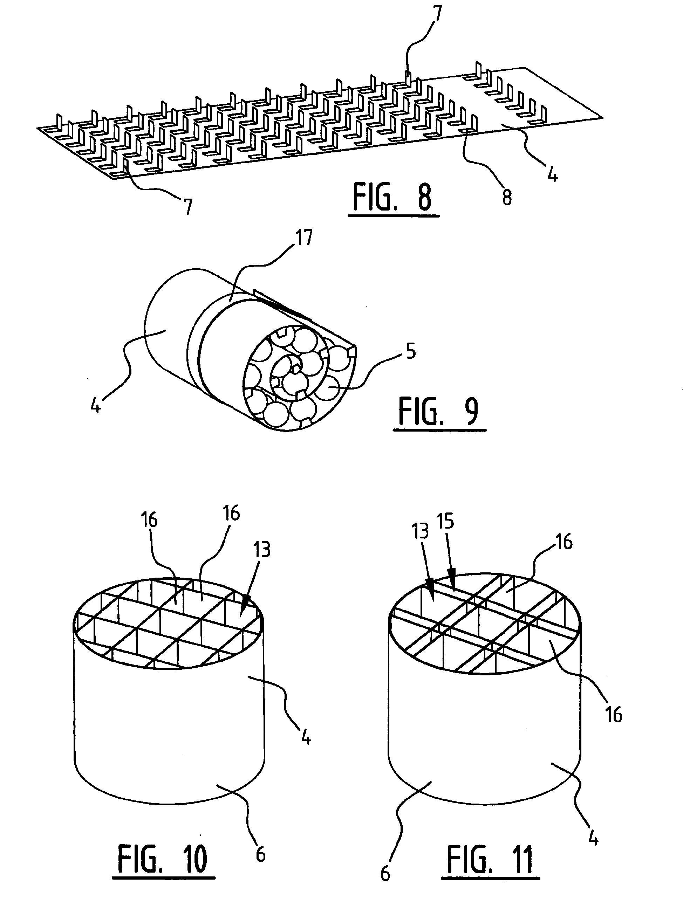

Figure 10 shows an embodiment whereby in the cylindrical perimeter wall 6 by flat walls 16 in a diamond pattern axial expending compartments 13 are applied, which are being filled with ice bolls 5. Also here the rims of the walls 6, 16 function as knives. Figure 11 shows a version whereby the compartments have different sizes, whereby only the big compartments are filled with bolls of ice 5. This causes that the liquid can freely flow through the in between laying compartments 15, whereby the heat transfer is improved.

Figures 8 and 9 show an embodiment whereby the bolls of ice 5 are applied on a flat wall 6 made of plastic, which has been applied with die-cut and bended rectangular knives 7 on which the bolls of ice 5 are being pressed and connected. This way the half product is packed in a disposable packaging. The consumer can after sales roll the partitioning element 4 with the bolls of ice 5 to a cylindrical element and secure it with for example a rubber band 17, in such a way that the knives 7 expend in axial direction.

## Claims

1. Packed half product for the preparation of a milkshake, containing a multiplicity of units of ice (5), and fractionating means (4) for the division into small parts of the units of ice (5), whereby the fractionating means (4) and the multiplicity of units of ice (5) are packed together in a consumer packaging, and whereby the fractionating means (4) are arranged in such a way that the units of ice (5) can be divided into small parts by taking the fractionating means (4) filled with the containing units of ice (5) out of the packaging and placing them in a substantially liquid tight container (1) and shaking this container (1) together with a liquid that has been added by the consumer.

2. Packed half product according to claim 1, whereby the units of ice (5) are ball shaped.

3. Packed half product according claim 1 or 2, whereby the fractionating means (4) contain a perimeter wall (6) in or upon which the units of ice (5) are put.

4. Packed half product according claim 3, whereby the perimeter wall (6) is rollable, bendable or foldable.

5. Packed half product according claim 3 or 4, whereby the perimeter wall (6) substantially is reel shaped, preferably substantially cylindrical shaped.

6. Packed half product according one of the previous claim 1-5, whereby the fractionating means (4) are provided with a multiplicity of knives (7) for the cutting of units of ice (5).

7. Packed half product according one of the previous claim 1-6, whereby the perimeter wall (6) is provided with holes (8).

8. Packed half product according claim 6 and 7, whereby the knives (7) and the holes (8) are configured by inwards bended parts of the perimeter wall (6).

9. Packed half product according one of the previous claim 6-8, whereby the knives (7) substantially are triangular shaped.

10. Packed half product according one of the previous claim 6-9, whereby the knives (7) substantially are spread regular across the surface of the perimeter wall (6).

11. Packed half product according one of the previous claim 6 - 10, whereby the knives (7) extend in axial direction.

12. Packed half product according claim 11, whereby the knives (7) have cutting edges that are pointing at both axial sides.

13. Packed half product according one of the previous claim 1-12, whereby the fractionating means (4) are produced from plastic or plasticized carton board.

14. Product for the preparation of a milkshake, covering a substantially liquid tight container (1) to contain the to be prepared milkshake, a multiplicity of ice units (5) applied in the container (1), and in the container (1) present fractionating means (4) for the partitioning of the ice units (5) in small parts, whereby the fractionating means (4) are applied in the container in such a way that the units of ice (5) can be divided in the container by shaking the container (1) with the units of ice (5) and a by the consumer added liquid enclosed therein, wherein the units of ice (5) are provided in and/or applied on the fractioning means (4).

15. Product according to claim 14, wherein the units of ice (5) are chosen from the group of ice cream, frozen curd and yogurt, preferably ice cream.

16. Product according to claim 14 or 15, whereby the fractionating means (4) contain a perimeter wall (6) in or upon which the units of ice (5) are put, wherein the perimeter wall (6) preferably is substantially reel shaped, more preferably substantially cylindrical shaped.

17. Product according to any one of claims 14 - 16, wherein the fractioning means are provided with a multiplicity of knives (7) for the cutting of units of ice (5), whereby the knives (7) are preferably substantially triangular shaped and/or spread regular across the surface of the perimeter wall (6).

18. Product according one of the previous claims 14-17, whereby the perimeter wall (6) is provided with holes (8).

19. Product according claim 17 and 18, whereby the knives (7) and the holes (8) are configured by inwards bended parts of the perimeter wall (6).

20. Product according one of the previous conclusions 14 - 19, whereby the fractioning means comprise knives (7) extending in axial direction, preferably knives (7) having cutting edges that are pointing at both axial sides.

21. Method for preparing a milkshake, wherein a consumer fills a container (1) with fractioning means (4) filled with units of ice (5), with a liquid, closes the container (1) with a lid (3) and shakes the container (1) forming a milkshake.

22. Method according to claim 21, using a packed half product according to any one of claims 1 - 13 or a product according to any one of claims 14 - 20.

## Patentansprüche

1. Verpacktes Halbprodukt zur Herstellung eines Milchshakes, enthaltend mehrere Einheiten Eis (5) und fraktionierende Mittel (4) zum Teilen der Einheiten Eis (5) in kleinere Teile, wobei die fraktionierenden Mittel (4) und die mehreren Einheiten Eis (5) zusammen in einer Verbraucherpackung verpackt sind und wobei die fraktionierenden Mittel (4) so angeordnet sind, dass die Einheiten Eis (5) in kleine Teile geteilt werden können, indem man die fraktionierenden Mittel (4), gefüllt mit den enthaltenen Einheiten Eis (5) aus der Verpackung nimmt und in einen im Wesentlichen flüssigkeitsdichten Behälter (1) gibt und diesen Behälter (1) zusammen mit einer Flüssigkeit, die von dem Verbraucher hinzugefügt wurde, schüttelt.

2. Verpacktes Halbprodukt nach Anspruch 1, wobei die Einheiten Eis (5) kugelförmig sind.

3. Verpacktes Halbprodukt nach Anspruch 1 oder 2, wobei die fraktionierenden Mittel (4) eine Umfangwand (6) aufweisen, in oder auf welche die Einheiten Eis (5) gegeben werden.

4. Verpacktes Halbprodukt nach Anspruch 3, wobei die Umfangwand (6) rollbar, biegbar oder faltbar ist.

5. Verpacktes Halbprodukt nach Anspruch 3 oder 4, wobei die Umfangwand (6) im Wesentlichen bandförmig, vorzugsweise zylinderförmig, ist.

6. Verpacktes Halbprodukt nach einem der vorhergehenden Ansprüche 1-5, wobei die fraktionierenden Mittel (4) mit mehreren Messern (7) zum Schneiden von Einheiten Eis (5) versehen sind.

7. Verpacktes Halbprodukt nach einem der vorhergehenden Ansprüche 1-6, wobei die Umfangwand (6) mit Löchern (8) versehen ist.

8. Verpacktes Halbprodukt nach den Ansprüchen 6 und 7, wobei die Messer (7) und die Löcher (8) durch nach innen gebogene Teile der Umfangwand (6) konfiguriert sind.

9. Verpacktes Halbprodukt nach einem der vorhergehenden Ansprüche 6-8, wobei die Messer (7) im Wesentlichen dreieckig sind.

10. Verpacktes Halbprodukt nach einem der vorhergehenden Ansprüche 6-9, wobei die Messer (7) im Wesentlichen regelmäßig über die Oberfläche der Umfangwand (6) verteilt sind.

11. Verpacktes Halbprodukt nach einem der vorhergehenden Ansprüche 6-10, wobei die Messer (7) in axialer Richtung verlaufen.

12. Verpacktes Halbprodukt nach Anspruch 11, wobei die Messer (7) Schneidkanten aufweisen, die zu beiden axialen Seiten weisen.

13. Verpacktes Halbprodukt nach einem der vorhergehenden Ansprüche 1-12, wobei die fraktionierenden Mittel (4) aus Plastik oder plastifiziertem Karton hergestellt sind.

14. Produkt zur Herstellung eines Milchshakes, bedeckend einen im Wesentlichen flüssigkeitsdichten Behälter (1) zum Aufnehmen des herzustellenden Milchshakes, mehrerer Einheiten Eis (5), angewendet in dem Behälter, und in dem Behälter (1) vorhandene fraktionierende Mittel (4) zum Teilen der Einheiten Eis (5) in kleine Teile, wobei die fraktionierenden Mittel (4) so in dem Behälter angewendet werden, dass die Einheiten Eis (5) in dem Behälter durch Schütteln des Behälters (1) mit den Einheiten Eis (5) und einer darin eingeschlossenen, durch den Verbraucher hinzugefügten Flüssigkeit geteilt werden können, wobei die Einheiten Eis (5) bereitgestellt werden in und/oder angewendet werden auf den fraktionierenden Mitteln (4).

15. Produkt nach Anspruch 14, wobei die Einheiten Eis (5) aus der Gruppe von Eiskrem, gefrorenem Quark und Joghurt, vorzugsweise Eiskrem, ausgewählt sind.

16. Produkt nach Anspruch 14 oder 15, wobei die fraktionierenden Mittel (4) eine Umfangwand (6) aufweisen, in oder auf welche die Einheiten Eis (5) gegeben werden, wobei die Umfangwand (6) vorzugsweise im Wesentlichen bandförmig, noch bevorzugter im Wesentlichen zylinderförmig, ist.

17. Produkt nach einem der Ansprüche 14-16, wobei die fraktionierenden Mittel mit mehreren Messern (7) zum Schneiden der Einheiten Eis (5) versehen sind, wobei die Messer (7) vorzugsweise im Wesentlichen dreieckig sind und/oder regelmäßig über die Oberfläche der Umfangwand (6) verteilt sind.

18. Produkt nach einem der vorhergehenden Ansprüche 14-17, wobei die Umfangwand (6) mit Löchern (8) versehen ist.

19. Produkt nach Anspruch 17 und 18, wobei die Messer (7) und die Löcher (8) durch nach innen gebogene Teile der Umfangwand (6) konfiguriert sind.

20. Produkt nach einem der vorhergehenden Ansprüche 14-19, wobei die fraktionierenden Mittel in axialer Richtung verlaufende Messer (7) umfassen, vorzugsweise Messer (7) mit Schneidkanten, die zu beiden axialen Seiten weisen.

21. Verfahren zur Herstellung eines Milchshakes, wobei ein Verbraucher einen Behälter (1) mit fraktionierenden Mitteln (4), gefüllt mit Einheiten Eis (5), mit einer Flüssigkeit füllt, den Behälter (1) mit einem Deckel (3) verschließt und den Behälter (1) schüttelt, um einen Milchshake zu bilden.

22. Verfahren nach Anspruch 21, das ein verpacktes Halbprodukt nach einem der Ansprüche 1-13 oder ein Produkt nach einem der Ansprüche 14-20 verwendet.

## Revendications

1. Demi-produit emballé pour la préparation d'un lait frappé, contenant une multitude d'unités de glace (5), et un moyen de fractionnement (4) pour la division en petites parties des unités de glace (5), dans lequel le moyen de fractionnement (4) et la multitude d'unités de glace (5) sont emballés ensemble dans un emballage de vente, et dans lequel le moyen de fractionnement (4) est agencé de telle manière que les unités de glace (5) peuvent être divisées en petites parties en sortant de l'emballage le moyen de fractionnement (4) rempli des unités de glace (5) et en le plaçant dans un récipient substantiellement étanche aux liquides (1) et en agitant ce récipient (1) en même temps qu'un liquide qui a été ajouté par le consommateur.

2. Demi-produit emballé selon la revendication 1, dans lequel les unités de glace (5) sont en forme de billes.

3. Demi-produit emballé selon la revendication 1 ou 2, dans lequel le moyen de fractionnement (4) contient une paroi périphérique (6) dans ou sur laquelle on pose les unités de glace (5).

4. Demi-produit emballé selon la revendication 3, dans lequel la paroi périphérique (6) peut être roulée, fléchie ou pliée.

5. Demi-produit emballé selon la revendication 3 ou 4, dans lequel la paroi périphérique (6) est substantiellement en forme de bobine, de préférence substantiellement de forme cylindrique.

6. Demi-produit emballé selon l'une des précédentes revendications 1 à 5, dans lequel le moyen de fractionnement (4) est pourvu d'une multitude de couteaux (7) pour couper les unités de glace (5).

7. Demi-produit emballé selon l'une des précédentes revendications 1 à 6, dans lequel la paroi périphérique (6) est pourvue de trous (8).

8. Demi-produit emballé selon les revendications 6 et 7, dans lequel les couteaux (7) et les trous (8) sont configurés par des parties de la paroi périphérique (6) courbées vers l'intérieur.

9. Demi-produit emballé selon l'une des précédentes revendications 6 à 8, dans lequel les couteaux (7) sont substantiellement de forme triangulaire.

10. Demi-produit emballé selon l'une des précédentes revendications 6 à 9, dans lequel les couteaux (7) sont substantiellement répartis de façon régulière sur la surface de la paroi périphérique (6).

11. Demi-produit emballé selon l'une des précédentes revendications 6 à 10, dans lequel les couteaux (7) s'étendent dans une direction axiale.

12. Demi-produit emballé selon la revendication 11, dans lequel les couteaux (7) ont des bords coupants qui pointent sur les deux côtés axiaux.

13. Demi-produit emballé selon l'une des précédentes revendications 1 à 12, dans lequel le moyen de fractionnement (4) est produit à partir de plastique ou d'un carton plastifié.

14. Produit pour la préparation d'un lait frappé, couvrant un récipient substantiellement étanche aux liquides (1) destiné à contenir le lait frappé à préparer, une multitude d'unités de glace (5) appliquées dans le récipient (1), et un moyen de fractionnement (4) présent dans le récipient (1) pour fractionner les unités de glace (5) en petites parties, dans lequel le moyen de fractionnement (4) est appliqué dans le récipient de telle manière que les unités de glace (5) peuvent être divisées dans le récipient en agitant le récipient (1) avec les unités de glace (5) et avec un liquide qui y est enfermé, ajouté par le consommateur, dans lequel les unités de glace (5) sont fournies dans et/ou appliquées sur le moyen de fractionnement (4).

15. Produit selon la revendication 14, dans lequel les unités de glace (5) sont choisies dans le groupe comprenant la crème glacée, le caillé congelé et le yaourt, de préférence la crème glacée.

16. Produit selon la revendication 14 ou 15, dans lequel le moyen de fractionnement (4) contient une paroi périphérique (6) dans ou sur laquelle on pose les unités de glace (5), dans lequel la paroi périphérique (6) est de préférence substantiellement en forme de bobine, mieux encore substantiellement de forme cylindrique.

17. Produit selon l'une quelconque des revendications 14 à 16, dans lequel le moyen de fractionnement (4) est pourvu d'une multitude de couteaux (7) pour couper les unités de glace (5), dans lequel les couteaux (7) sont de préférence substantiellement de forme triangulaire et/ou répartis de façon régulière sur la surface de la paroi périphérique (6).

18. Produit selon l'une des précédentes revendications 14 à 17, dans lequel la paroi périphérique (6) est pourvue de trous (8).

19. Produit emballé selon les revendications 17 et 18, dans lequel les couteaux (7) et les trous (8) sont configurés par des parties de la paroi périphérique (6) courbées vers l'intérieur.

20. Produit selon l'une des précédentes revendications 14 à 19, dans lequel le moyen de fractionnement comprend des couteaux (7) s'étendant dans une direction axiale, de préférence les couteaux (7) ayant des bords coupants qui pointent sur les deux côtés axiaux.

21. Procédé de préparation d'un lait frappé, dans lequel un consommateur remplit de liquide un récipient (1) et d'un moyen de fractionnement (4) rempli d'unités de glace (5), ferme le récipient (1) avec un couvercle (3) et agite le récipient (1) en formant un lait frappé.

22. Procédé selon la revendication 21, utilisant un demi-produit emballé selon l'une quelconque des revendications 1 à 13 ou un produit selon l'une quelconque des revendications 14 à 20.
